# EUROPEAN PATENT APPLICATION

(11) **EP 2 883 943 A1**
(43) Date of publication of application: **17.06.2015**
(21) Application number: 13197561.7
(22) Date of filing: 16.12.2013
(51) Int. Cl.: C10L 5/14, C10L 5/36, C10L 5/44, C10L 9/08, C10B 53/02, C10B 57/02

(54) **Manufacture of fuel briquettes from thermally processed biomass**

(71) Applicant: Arigna Fuels Limited, County Roscommon (IE)
(72) Inventor: Layden, Peter, County Roscommon (IE); Johnson, Robert, County Leitrim (IE)
(74) Representative: Schütte, Gearoid

(57) **Abstract**

A process for manufacturing fuel briquettes includes partially pyrolysing (12) a biomass feedstock at a temperature in the range 200°C - 300°C to produce a char. The char is conditioned (14) in a carbonisation reaction at a temperature of 300°C-450°C for forming a carbonised char product. After cooling (16) the carbonised char, it is ground (18) to less than 3mm nominal size and blended (20) with coal fines and a binder (24) before forming briquettes (28) which are subsequently cured (29).

## Description

### Introduction

This invention relates to fuel briquettes and to a process for manufacturing fuel briquettes.

### Background

Fuel briquettes or 'ovoids' are made from granulated/ powdered carbonaceous materials such as bituminous coal, petroleum coke, anthracite and charcoal, which are generally mixed with a binder, compressed and then cured. Many variations of briquettes exist, with differing binder types and curing processes - some briquettes are formed without a binder, such as those made from peat or lignite, utilising the lignin content of the material as a binder. All briquette manufacturing processes are designed to produce a water resistant and innately strong and durable product, maintaining integrity during manufacturing, storage and bagging processes.

It is generally accepted that it is desirable to both protect the environment through reduction of CO₂ emissions and provide affordable 'greener' domestic home heating products to the end-user, with reduction of smoke emissions when compared to traditional woody biomass products.

To comply with smokeless fuel regulations in Ireland, briquettes made containing bituminous coal products with energy content greater than 24MJ/Kg must comprise less than 14% volatile matter or if greater, must emit no more than 10g per hour of smoke from 3.6Kg of fuel according to British Standard 3841:1994 (AIR POLLUTION ACT, 1987 (MARKETING, SALE, DISTRIBUTION AND BURNING OF SPECIFIED FUELS) REGULATIONS, 2012).

The process of torrefaction has existed for many years and is well understood by those skilled in the art. It is the thermal conversion of biomass under controlled pyrolysis conditions in the range 200 - 300°C, characterised by decomposition of bio-polymers, specifically hemicellulose. The purpose of this is to not only obtain a product with reduced mass and higher energy density, but also reduce the amount of smoke-producing volatile compounds. Another benefit of torrefaction is ease of milling/crushing when compared to fibrous woody biomass, meaning existing equipment can be employed if desired by the end-user. However, to achieve maximum energy recovery in terms of char material and minimise losses, torrefaction temperatures of 260 - 290°C are the industry norm. This very specific temperature range is suitable for pelletising and binder-less briquetting as inherent lignin required for binding purposes is barely changed with low temperature pyrolysis.

Reference material on the torrefaction process to include feedstock and product characterisation, mass and energy balances and economic analysis can be found in publications from the Energy research Centre for the Netherlands (ECN), specifically ECN-RX--05-180 'Torrefaction for biomass upgrading' P.C.A. Bergman and J.H.A. Kiel (2005), ECN-C--05-073 'Combined torrefaction and pelletisation - the TOP process' P.C.A.Bergman (2005) and ECN-C-05-013 'Torrefaction for biomass co-firing in existing coal-fired power stations - BIOCOAL' P.C.A.Bergman, A.R.Boersma, R.W.R.Zwart and J.H.A. Kiel (2005).

Thermal treatments of woody biomass to produce charcoal are well understood and have been utilised for thousands of years. The thermochemical process yields very high carbon content material (∼90%) at elevated temperatures of 500 - 600°C but at the cost of yield (∼30%) and is therefore inefficient, raising the carbon cost of the material.

For briquetting processes, various binders can be employed including, but not limited to the following; Starch (U.S.Pat.No. 44,994, GB2260767A), molasses (GB2187754A, GBP230306), bitumen (U.S.Pat.No. 4,698,067), lignosulphonate (GB2196643A), gums (guar/ xanthan) (WO88/00232), polyvinyl alcohol (PVA) (Europatent 0135784, U.S.Pat.No. 4,787,913) and lignin (WO2010075306). The binders can be used on their own or with cross-linking agents - phosphates, sulphates, urea and formaldehyde etc. The curing process, depending on the binder can be hot (above 100°C, typically 200 - 300°C) or 'cold' (below 100°C, typically below 60°C).

UK patent GB2448531B discloses production of torrefied wood via a batch-type process and the subsequent production of briquettes from blends of torrefied wood, coals as previously described and a molasses/ phosphoric acid binder. The patent discloses briquette production essentially comprising five steps: 1, grinding/shredding procured wood to below 200mm; 2, torrefying the wood in a batch process; 3, crushing torrefied wood to below 10mm particle size; 4, providing crushed coal to below 5mm particle size and 10 wt% moisture content (W/W basis); 5, mixing the torrefied wood and coal components with a binder, forming briquettes and curing the binder. Briquette feedstock components are as follows:

| **Component** | **% by weight, dry** | **Preferable composition** |
|---|---|---|
| torrefied wood | 5-40 | 5-15 |
| Coal | 0-85 | balance |
| petroleum coke | 0-60 | 15-25 |
| binder | 5-30 | 10-20 |

By the inventors own admission, briquettes made with torrefied wood addition rates of 15 wt% and above, were more prone to breakage and auto-ignition during the briquette curing stage, also that additional fire performance benefits diminished at torrefied wood addition rates above 10 wt%. Thus the optimum level of torrefied wood was deemed to be in the region of 10 wt%.

As a process, there is much information relating to biomass torrefaction in the public realm such as the process described by Bergman et al mentioned previously. There are other torrefaction processes which utilise direct heating (WO2102/16779 A1) and indirect heating (U.S.Pat.No. US2012/0279115 A1). Yang H et al. (Characteristics of Hemicellulose, Cellulose and Lignin Pyrolysis Fuel, 2007) shows the optimal temperature range for typical torrefaction processes that retain the bulk of the lignin and cellulose structure. As can be seen, it is the hemicellulose portion that is more readily degraded up to 300°C, leaving the lignin proportion available for binder-less pelletisation/ briquetting.

### Summary of the Invention

According to the invention there is provided a process for manufacturing fuel briquettes including:
partially pyrolysing a biomass feedstock at a temperature in the range 200°C to 300°C to produce a char;
conditioning the char in a carbonisation reaction in a controlled temperature environment at 300°C - 450°C for forming a carbonised char product;
cooling the carbonised char product to quench the carbonisation reaction;
blending the carbonised char product with coal to form a blend mixture;
adding a binder to the blend mixture and mixing the binder with the blend mixture, and
forming fuel briquettes from the blend mixture.

In one embodiment of the invention the process includes conditioning the char by utilising heat generated by an auto-exothermic reaction that occurs from rapid partial decomposition of lignin and cellulose for maintaining a temperature of 300 - 450°C during the conditioning step.

In another embodiment of the invention the process includes the step of controlling the carbonisation reaction with an inert gas. Conveniently the inert gas may be selected from one or more of nitrogen, carbon dioxide, steam or scrubbed flue gas.

In a further embodiment of the invention the process includes the step of recovering volatile gases during the pyrolysis step and/or the conditioning step and using said volatile gases for generating heat for the pyrolysis step.

In another embodiment of the invention the binder is modified starch. Preferably the starch content is in the range 3-8 wt% and more preferably in the range 3-5 wt%.

In an alternative embodiment the binder is molasses/phosphoric acid. With this binder content in the range 5-30 wt% is used, and more preferably the binder content is in the range 5-15 wt%.

In another embodiment of the invention the process includes the step of cooling the carbonised char product to a temperature below 180°C.

In a further embodiment the process includes after cooling the carbonised char product, grinding and/or grading the carbonised char product into particles having a maximum size of 3mm.

In another embodiment of the invention the biomass feedstock has a particle size not exceeding 20mm. Preferably the biomass feedstock has a moisture content not exceeding 40% and more preferably the moisture content does not exceed 20%.

In another embodiment of the invention the briquette feedstock components are mixed in the following proportions:

| **Component** | **% by weight, dry** |
|---|---|
| Anthracite | 0-50 |
| Bituminous coal | 0-30 |
| Petroleum coke | 0-30 |
| Biomass char | 5-95 |
| Binder | 3-30 |

Preferably the biomass char comprises at least 40% by weight of the briquette feedstock.

In another aspect the invention provides a fuel briquette comprising the following components:

| **Component** | **% by weight, dry** |
|---|---|
| Anthracite | 0-50 |
| Bituminous coal | 0-30 |
| Petroleum coke | 0-30 |
| Biomass char | 5-95 |
| Binder | 3-30 |

Preferably the biomass char comprises at least 40% by weight of the briquette.

### Brief Description of the Drawings

The invention will be more clearly understood by the following description of some embodiments thereof, given by way of example only, with reference to the accompanying drawings, in which:
Fig. 1 is a schematic illustration of a process for manufacturing fuel briquettes according to the invention; and
Fig. 2 is a schematic illustration of another process for manufacturing fuel briquettes according to the invention.

### Detailed Description of the Preferred Embodiments

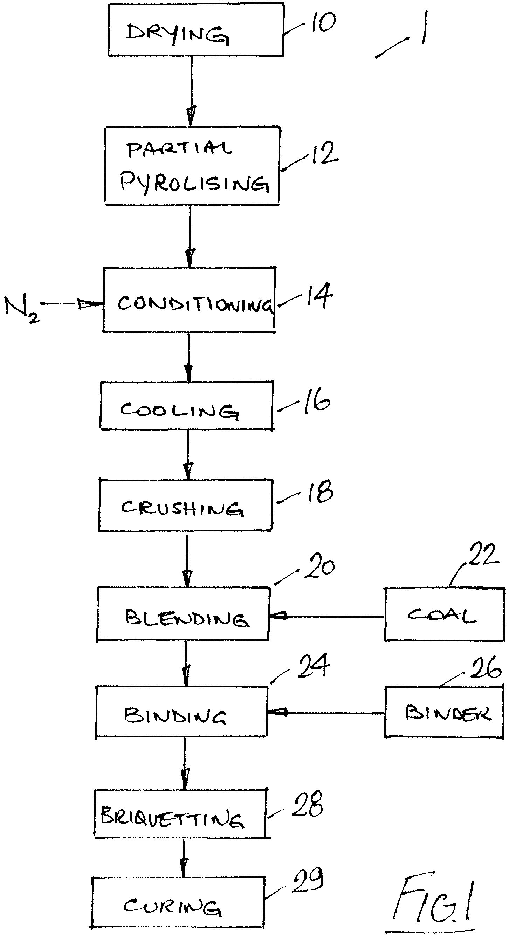

Referring to the drawings, and initially to Fig. 1 thereof, there is illustrated a process for manufacturing fuel briquettes according to the invention indicated generally by the reference numeral 1. A suitable graded or ground biomass feedstock, having a nominal diameter of less than 20mm, is delivered to a drying station 10 to reduce the moisture content if required. Downstream of the drying station 10 the biomass feedstock is delivered through a pyrolysing station 12 where it is subjected to a temperature in the range 200 - 300°C to produce a solid char and a high moisture content gaseous fraction. The gaseous fraction contains thermal degradation products and has a calorific value of about 7.9 mJ/m³. Conveniently, the gaseous fraction may be burned in a suitable boiler or combustion chamber to provide heat for the drying and/or pyrolysis steps of the process.

The char is delivered to a conditioning chamber 14. The temperature within the conditioning chamber 14 is controlled to a range of 300 - 450°C. It is generated within the conditioning chamber 14 by the auto-exothermic reaction that occurs from rapid partial decomposition of lignin and cellulose in the char. This conditioning reaction is controlled with nitrogen, heat transfer and residence time, the auto-exothermic reaction being precisely manipulated to a temperature of 300 - 450°C to produce a desired carbonised char product.

The carbonised char product is delivered to a cooling station 16 for cooling the carbonised char product to less than 180°C for quenching the carbonisation reaction.

Thereafter, the carbonised char product is ground 18 and/or graded to a particle size not exceeding 3mm. The ground carbonised char product is then mixed 20 with coal fines 22 in any desired ratio.

The blended coal and carbonised char are then mixed 24 with a suitable binder 26 and formed into briquettes 28 which are subsequently cured 29.

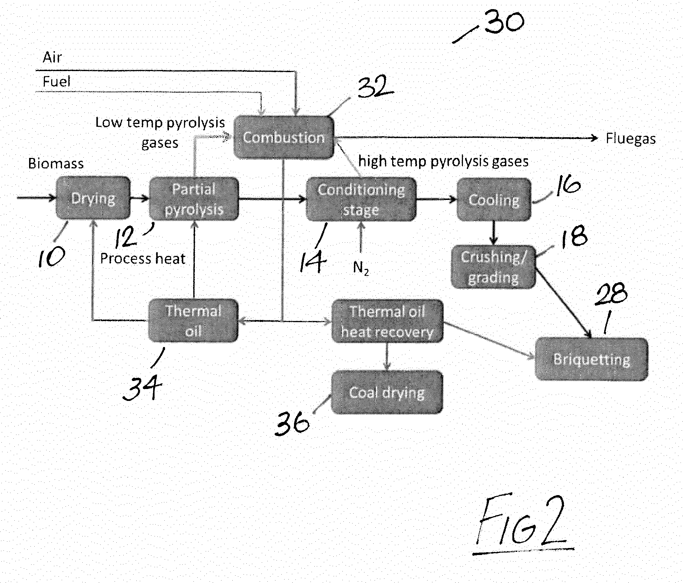

Fig. 2 shows another process according to the invention indicated generally by the reference numeral 30. This process is largely similar to the process previously described and parts similar to those described previously are assigned the same reference numerals. Fuel, which may comprise gaseous fuels, oil, biomass, or coal, for example, is burned in a combustion chamber 32 to provide heat for the drying 10 and pyrolysis 12 steps. It will be noted that volatile gas driven from the biomass material during the pyrolysis 12 and/or conditioning 14 steps of the process can be delivered to the combustion chamber 32 to improve the efficiency of the process. Combustion gases are used to heat thermal oil 34 used to control heating in the drying 10 and/or pyrolysis 12 steps. The thermal oil system can also be used to provide heat for coal drying 36, or briquetting 28 purposes.

The briquette feedstock components are mixed in the following proportions:

| **Component** | **% by weight, dry** |
|---|---|
| Anthracite | 0-50 |
| Bituminous coal | 0-30 |
| Petroleum coke | 0-30 |
| Biomass char | 5-95 |
| Binder | 3-30 |

Preferably the biomass char comprises at least 40% by weight of the briquette feedstock.

The present invention provides a process for manufacturing smokeless fuel briquettes for use in domestic and commercial applications. The present invention encompasses the use of a modified screw auger with maximised heat transfer area (∼20m²m⁻³), with both heated jacket and screw allowing superior heat transfer through the biomass. The full manufacturing process design offers both dust suppression and mitigation when compared to traditional screw augers and therefore there are fewer risks associated with the process pertaining to dust explosions. As biomass and thermally treated biomass dusts are more reactive with higher Kₛₜ and Pₘₐₓ values than corresponding particle sized coal, the slow auger speed, nitrogen blanket, rotary valves, minimal reactor void space and aftermarket explosion suppression/ venting, make for an intrinsically safe process. The resulting fuels meet legislative criteria for smoke emissions, offer a reduction in emissions and increased energy output when compared to traditional woody biomass fuels and contain high levels of renewable materials, reducing SOₓ and NOₓ emissions and providing more environmentally sound products to the solid fuel market.

It is an aim of the present invention to provide a continuous process for the production of smokeless fuel briquettes encompassing carbonised biomass produced at temperatures in excess of those typically utilised for torrefaction processes, which is expedient and efficient.

The present invention refers to biomass as feedstock for the thermal conversion process. It is to be understood, unless the context otherwise requires, that it includes within its meaning organic biomass generally. Within the context of the present invention this specifically refers to nut kernels, drupes and native Irish rushes of the species *Juncus.* This following list is not exhaustive, but the process can comprise of;
- Wood from forestry including tree bark and waste sources
- Straw, Bran, Wheat grain and other residues from agriculture
- By-products of the food industry e.g. olive cake
- Slurries of organic matter with moisture content 40 - 80 wt% e.g. Algae, anaerobic digestate

The suitability of biomass products as feedstock for the thermal conversion process in the present invention depends on factors that are clarified below and will be apparent for those skilled in the art. They will understand limiting factors pertaining to biomass types and bio-composition and assess suitability. Organic biomass unsuitable for the process is, of course, excluded from the scope of the term 'biomass'.

The term 'carbonised char' as used herein refers to thermally treated biomass within the scope of the current invention, produced at temperatures 300 - 450°C and with not only reduced volatile content when compared to torrefaction products, but also higher carbon content to enable more efficient briquetting in the presence of a suitable binder.

In one currently preferred embodiment, the feedstock is a drupe such as olive stone, supplied with a moisture content of below 20 wt%. Preferably biomass feedstock moisture contents are below 40 wt%, though higher moisture contents can be used in the process, but with efficiency reductions.

The initial combined drying and heating processes are achieved by heating the feedstock indirectly with thermal oil utilising heat transfer through metal, in a suitable reactor to suppress dust production, with a surface area to volume ratio in the region of 20m² per m³ to maximise heat transfer and in oxygen depleted atmosphere. The temperature range of the initial partial-pyrolysis process is 250-300°C, with a residence time in the reactor being largely dependent on the moisture content of the feedstock, typically 10 minutes - 1 hour.

After the first stage heating, the char material has lost approx. 30 wt%, but has retained up to 90% of the calorific value of the original biomass feedstock. The gaseous fraction extracted and re-burned in the boiler or combustion chamber contains steam, CO, CO₂, tars and other compounds, the greater proportion being organic acids and heterocyclic organic compounds such as furfural. As previously stated, briquetting of torrefied material at this stage is not preferred due to the retention of fibrous structure within the material, low bulk density and smoke emitted from combustion due to high volatile content.

The char material then passes into a separate, defined conditioning stage, whereby, dependent on the feedstock and desired product and by utilising the auto-exothermic reaction that occurs from rapid partial decomposition of lignin and cellulose, the carbonisation reaction is controlled to a range of 300 - 450°C by manipulating the environment within the chamber. This process also yields gaseous products, but with a higher CV (calorific valve) than previously stated. These gaseous products are also removed and re-burned in the combustion chamber, enabling high levels of energy recovery from the process either via thermal oil used for the process or by heat recovery in a separate thermal oil system, providing heat for coal drying or briquetting purposes.

Carbon contents for products exiting the conditioning stage can be as high as 75%, far greater than those typically obtained from torrefaction previously reported. Torrefaction is more specifically referred to as hemicellulose degradation in the temperature range of 220 - 300°C and for current torrefaction processes that result in pelletisation, the lignin structure must be retained as it is this matrix that provides binding properties.

Carbonised char then passes through the cooling system whereby the carbonised char temperature is lowered to below 180°C to quench the reaction and prevent further decomposition of the product. Cooling can take place via indirect heat transfer, by the addition of steam or water or by inert gas. The carbonised char is then graded and ground to below 3mm for inclusion in the briquetting process. A suitable briquette manufacturing process is described in detail in GB2260767A.

Fuel for the thermal oil boiler can be solid, liquid or gaseous, but must be able to combust high moisture content and low CV gases originating from torrefaction. The benefit of re-using pyrolysis gases in this manner is that the reaction is self-sustaining.

With using heating oil as an indirect method of heat transfer, the cost of purchase and gradual decomposition of oil at elevated temperatures means the temperature of the process would be capped at 300°C.

Pyrolysed biomass undergoes rapid exothermic reactions above 275°C. Energy produced from these well understood reactions is well able to raise the material temperature to 450°C and above with no additional heat input. It is the conditioning stage detailed previously that is able to utilise and control this reaction to produce carbonised material with carbon content on a dry basis closer to that of coal, in the region of 70-75 wt% (woody biomass -∼ 47 wt% carbon, coal - ∼75 to 95 wt% carbon).

Advantageously, in accordance with the present invention use of a continuous manufacturing process for biomass carbonisation rather than a batch system enables re-burning of evolved gaseous biomass thermal decomposition products with a calorific value in the region of 7.9MJ/m³, in a specially designed boiler or combustion chamber, thus increasing the efficacy of the process.

Fuel input for combustion can comprise, but is not limited to; gaseous fuels, oil, biomass and coal.

It is by employing the conditioning stage immediately after low temperature pyrolysis that reduces the volatile content of biomass significantly, comparable to that of coal, increases energy and physical density of the material, providing a material suitable for briquetting using a process of the type described in GB2260767A, whilst also reducing smoke emissions to meet the current legislative criteria.

Biomass has very low sulphur content, typically less than 0.1 wt%. Thermally treating biomass via the aforementioned process can concentrate this to no greater than 0.2 wt%, values being much less than coals which range from 0.5 - 7.5 wt%, thus the combustion of biomass does not contribute significantly to SOₓ production and related aerosol generation.

The current invention requires an oxygen depleted atmosphere for carbonisation. This may be achieved by supply of an inert gas (e.g. nitrogen/ CO₂), steam or scrubbed flue-gas from combustion processes.

As previously stated, the thermally processed biomass char produced by the current invention can be combined with coal fines in any proportion to make a fuel briquette. Binders are required for this process due to the aforementioned lignin decomposition at elevated pyrolysis conditions. The binder for the briquetting process can be any from the list previously mentioned, preferably modified starch or molasses/ phosphoric acid, with starch binder content being 3 - 8 wt%, optionally 3 - 5 wt%. For molasses/ phosphoric acid binder, the binder content is being 5 - 30 wt%, optionally 5 - 15 wt%.

Fuel briquettes can be made from carbonised biomass blended with anthracite and/or petcoke and with a suitable binder in any proportion as long as air quality legislation is adhered to. Carbonised biomass produced from the present invention may also be made into 100% renewable fuel briquettes with the addition of starch or molasses binder, similar to charcoal briquettes.

These 100% renewable briquettes may be suitable for domestic and commercial users as barbeque fuel, due to the reduced volatile content and reduction of harmful organic compounds typically generated by wood smoke, specifically; . 1,3-butadiene, benzene, carbon monoxide (CO), formaldehyde, isomers of xylene, particulate matter ≤ 10 microns (PM10), particulate matter ≤ 2.5 microns (PM2.5), polycyclic aromatic hydrocarbons (PAH), toluene and volatile organic compounds (VOC).

Due to the reduced volatile content of thermally converted biomass as described earlier (20 - 50 wt%) when compared to charcoal (below 30 wt%), it may be prudent to make barbeque briquettes containing both charcoal and thermally processed biomass, to create an easier lighting material, without the use of liquid mineral fuels (e.g. kerosene) sometimes employed.

Though torrefaction can yield up to 90% of the initial biomass energy density, at the lower end of the temperature scale, with careful control of process conditions extending beyond those normally associated with torrefaction, a subtly different product can be engineered, which is similar to coal and more importantly more suited to briquetting 1) due to the increased density after crushing and 2) having a material carbon content engineered from 55 to 75% on a dry basis, with any additional energy released by the pyrolysis process in the form of gaseous products being used to supplement the manufacturing and briquetting processes.

The invention is not limited to the embodiments hereinbefore described which may be varied in both construction and detail within the scope of the appended claims.

## Claims

1. A process for manufacturing fuel briquettes including:
partially pyrolysing a biomass feedstock at a temperature in the range 200°C to 300°C to produce a char;
conditioning the char in a carbonisation reaction in a controlled temperature environment at 300°C - 450°C for forming a carbonised char product;
cooling the carbonised char product to quench the carbonisation reaction;
blending the carbonised char product with coal to form a blend mixture;
adding a binder to the blend mixture and mixing the binder with the blend mixture, and
forming fuel briquettes from the blend mixture.

2. The process as claimed in claim 1 wherein the process includes conditioning the char by utilising heat generated by an auto-exothermic reaction that occurs from rapid partial decomposition of lignin and cellulose for maintaining a temperature of 300 - 450°C during the conditioning step.

3. The process as claimed in any preceding claim wherein the process includes the step of controlling the carbonisation reaction with an inert gas.

4. The process as claimed in claim 3 wherein the inert gas may be selected from one or more of nitrogen, carbon dioxide, steam or scrubbed flue gas.

5. The process as claimed in any preceding claim wherein the process includes the step of recovering volatile gases during the pyrolysis step and using said volatile gases for generating heat for the pyrolysis step.

6. The process as claimed in any preceding claim wherein the binder is modified starch.

7. The process as claimed in claim 6 wherein the starch content is in the range 3-8 wt%.

8. The process as claimed in any one of the claims 1 to 5 wherein the binder is molasses/phosphoric acid.

9. The process as claimed in claim 8 wherein the binder content is in the range 5-30 wt%.

10. The process as claimed in any preceding claim wherein the process includes the step of cooling the carbonised char product to a temperature below 180°C.

11. The process as claimed in any preceding claim wherein after cooling the carbonised char product, grinding and/or grading the carbonised char product into particles having a maximum size of 3mm.

12. The process as claimed in any preceding claim wherein the biomass feedstock has a particle size not exceeding 20mm, and preferably the biomass feedstock has a moisture content not exceeding 40%.

13. The process as claimed in any preceding claim wherein the briquette feedstock components are mixed in the following proportions:
| **Component** | **% by weight, dry** |
|---|---|
| Anthracite | 0-50 |
| Bituminous coal | 0-30 |
| Petroleum coke | 0-30 |
| Biomass char | 5-95 |
| Binder | 3-30 |

14. The process as claimed in claim in Claim 13 wherein the biomass char comprises at least 40% by wt% of the briquette feedstock.

15. A fuel briquette comprising the following components:
| **Component** | **% by weight, dry** |
|---|---|
| Anthracite | 0-50 |
| Bituminous coal | 0-30 |
| Petroleum coke | 0-30 |
| Biomass char | 5-95 |
| Binder | 3-30 |
